# EUROPÄISCHE PATENTSCHRIFT

(11) **EP 1 051 648 B1**
(45) Veröffentlichungstag und Bekanntmachung des Hinweises auf die Patenterteilung: **09.04.2003**
(21) Anmeldenummer: 99903666.8
(22) Anmeldetag: 21.01.1999
(51) Int. Cl.: G02B 5/18

(54) **FLÄCHENMUSTER MIT ÜBERLAGERTEN BEUGUNGSGITTERN**
PLANAR PATTERNS WITH SUPERIMPOSED DIFFRACTION GRATING
MOTIFS PLANS A RESEAUX DE DIFFRACTION SUPERPOSES

(30) Priorität: 27.01.1998 CH 19198
(43) Veröffentlichungstag der Anmeldung: 15.11.2000
(73) Patentinhaber: OVD Kinegram AG, 6301 Zug (CH)
(72) Erfinder: STAUB, René, CH-6330 Cham (CH); TOMPKIN, Wayne, Robert, CH-5400 Baden (CH)
(74) Vertreter: LOUIS, PÖHLAU, LOHRENTZ & SEGETH
(86) Internationale Anmeldenummer: EP9900388
(87) Internationale Veröffentlichungsnummer: WO99038039

(56) Entgegenhaltungen:
- WO-A-97/27504
- US-A- 4 155 627

## Beschreibung

Die Erfindung bezieht sich auf eine Anordnung von optisch beugungswirksamen Flächen gemäss dem Oberbegriff des Anspruch 1.

Solche Flächenmuster werden bei beugungsoptischen Sicherheitselementen, die aus Hologrammen und/oder mosaikartig zusammengesetzten Beugungsgittern aufgebaut sind, zur Erhöhung der Fälschungssicherheit zusätzlich verwendet.

Eine Anordnung der eingangs genannten Art bei beugungsoptischen Sicherheitselementen ist aus der EP-A 105'099 bekannt. Sie beschreibt die Erzeugung von variablen Mustern aus optisch beugungswirksamen Teilflächen, die z.B. als Marke auf ein Dokument geklebt werden und dessen Echtheit bezeugen. Wird das Sicherheitsmerkmal beleuchtet, so leuchten beim Drehen um eine Achse senkrecht zur Ebene des Sicherheitsmerkmals längs einer Bahn diese Teilflächen nacheinander auf.

' Die PCT - Anmeldung WO 97/27504 zeigt ein Flächenmuster mit wenigstens zwei Teilflächen, von denen wenigstens eine Teilfläche ein aus zwei Reliefstrukturen überlagertes Beugungsgitter enthält, die in einer ausgezeichneten Richtung die gleiche Beugungseigenschaft hat wie eine verschiedene zweite beugungswirksame Fläche. In ändern Richtungen weisen die beiden Teilflächen ein unterschiedliches Beugungsverhalten auf. Die beiden Reliefstrukturen des überlagerten Beugungsgitters unterscheiden sich wenigstens in einem der Parameter Spatialfrequenz, Reliefform und Azimut.

Die US 4,155,627 lehrt die Herstellung von Reliefstrukturen mit einer Vielzahl von Höhenstufen, wobei die Reliefstrukturen ein symmetrisches oder asymmetrisches Profil aufweisen können.

Die EP - A 0'357'837 beschreibt ein Flächenmuster mit mosaikartig angeordneten, optisch diffraktiv wirkenden Flächenelementen. Die Beugungsgitter einiger dieser Flächenelemente sind durch eine Ueberlagerung eines Paares von diffraktiven Reliefstrukturen erzeugt, wobei sich die beiden Reliefstrukturen jedes Paares in ihrer Spatialfrequenz unterscheiden. Die Furchen der Reliefstrukturen jedes Paares sind parallel ausgerichtet.

Das Dokument EP - A 0'712'012 offenbart eine Reliefstruktur, deren Profil in der Tiefe und/oder im Verhältnis der Breite der Höhen zu der Breite der Tiefen variiert.

Es ist auch aus der EP - A 0'360'969 bekannt, wenigstens ein optisches Beugungselement des beugungsoptischen Echtheitsmerkmals in zwei Teilflächen zu unterteilen, deren mikroskopisch feinen asymmetrischen Beugungsgitter sich nur im Azimut um 180° unterscheiden bei sonst gleichen andern Gitterparametern. Mit diesen unterteilten Beugungselementen sind maschinell lesbare Informationen unauffällig in einem visuell sichtbaren Muster unterzubringen.

Die oben aufgeführten Dokumente beschreiben Sicherheitselemente ohne wirksame Nutzung einer Helligkeitsmodulation innerhalb grösseren, vom unbewaffneten menschlichen Auge gut erkennbaren Flächen.

Des weiteren beschreibt die EP-A 0'401'466 ein Kunststofflaminat mit eingebetteten mikroskopisch feinen, optisch wirksamen Reliefstrukturen und dessen Verwendung als Sicherheitselement. Die verwendbaren Materialien sind beispielsweise aus der EP-0'201'323 B1 bekannt.

Der Erfindung liegt die Aufgabe zugrunde, ein kostengünstiges und auch mit holographischen Kopierverfahren schwer zu fälschendes Flächenmuster mit einem auch in diffusem Licht gut sichtbaren, neuen Echtheitsmerkmal für beugungsoptische Sicherheitselemente zu schaffen.

Die genannte Aufgabe wird erfindungsgemäss durch die im Kennzeichen der Ansprüche 1 und 2 angegebenen Merkmale gelöst. Vorteilhafte Ausgestaltungen der Erfindung ergeben sich aus den abhängigen Ansprüchen.

Ausführungsbeispiele der Erfindung sind in den Zeichnungen dargestellt und werden im folgenden näher beschrieben.

Es zeigen:
- Figur 1: ein Flächenmuster,
- Figur 2: das Flächenmuster um einen Drehwinkel α = 90° gedreht,
- Figur 3: das zweites Bildelement mit Schriftband bei 0° und 180°,
- Figur 4: ein Muster mit einer sich lokal ändernder Phasenverschiebung,
- Figur 5: ein anderes Muster mit der sich von einem zentralen Punkt aus ändernden Phasenverschiebung,
- Figur 6: ein anderes Muster mit einer sich radial ändernder Phasenverschiebung,
- Figur 7: Beugungswirkungsgrad und relative Phasenverschiebung und
- Figur 8: Beugungsordnungen.

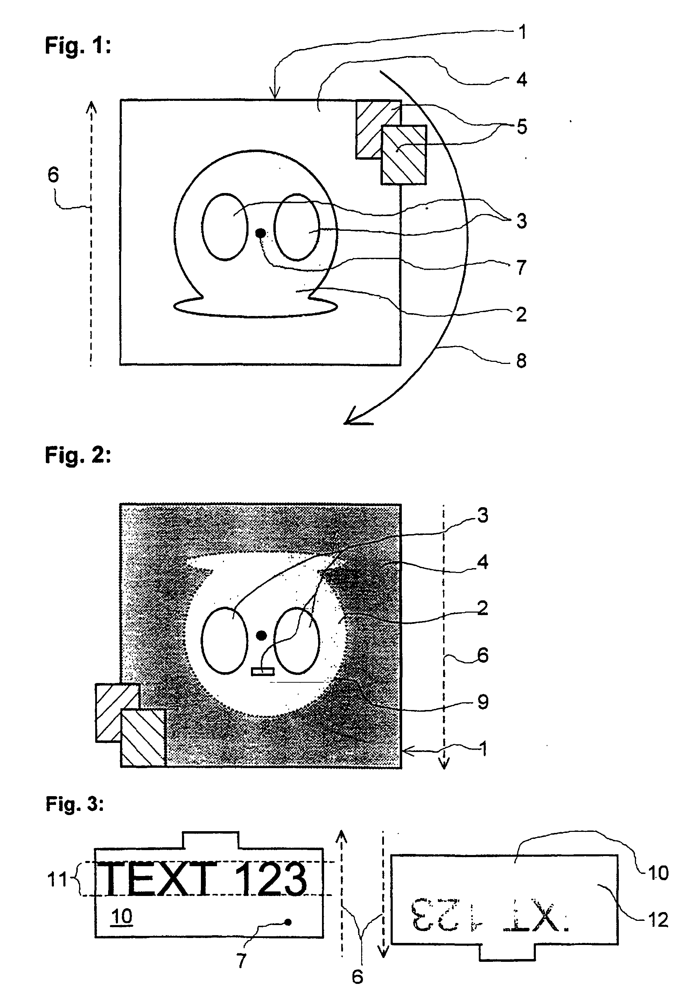

In der Figur 1 bedeuten 1 ein Flächenmuster, 2 ein Bildelement, 3 ein Flächenelement, 4 ein Hintergrundelement, 5 weitere Teilelemente, die das mosaikartige Flächenmuster 1 vervollständigen. Das Flächenelement 3 und die Teilelemente 5 sind in diesem Beispiel mit optisch beugungswirksamen oder streuenden mikroskopischen Reliefstrukturen (Hologramme, Kinoforms, Beugungsgitter aller Art) belegt oder weisen spiegelnde oder transparente Flächen auf. Die äussere Begrenzung und Anzahl aller Elemente 2 bis 5 des Flächenmusters 1 sind keiner Beschränkung unterworfen. Das Bildelement 2 und das Hintergrundelement 4 weisen je ein Beugungsgitter B (F₁, F₂, Δϕ) mit dem Gittervektor G auf, das durch eine Ueberlagerung von wenigstens zwei Reliefstrukturen F₁, F₂ erzeugt ist und deren Gittervektoren G₁, G₂ im wesentlichen parallel bzw. antiparallel zu einer ausgezeichneten Achse 6 ausgerichtet sind. Die Eigenschaften der Beugungsgitter und die Darstellung der Gittervektoren G₁, G₂ sind in der eingangs genannten PCT - Schrift WO 97/27504 beschrieben. Die Spatialfrequenz f₁ der Reliefstruktur F₁ ist niedriger als die Spatialfrequenz f₂ der Reliefstruktur F₂. Die Reliefstruktur F₂ hat gegenüber der Reliefstruktur F₁ eine relative Phasenverschiebung Δϕ. Die relative Phasenverschiebung Δϕ des Beugungsgitters B (F₁, F₂, Δϕ) kann im ganzen Feld des Bildelements 2 und /oder im Feld des Hintergrundelements 4 einen konstanten Wert haben, wobei sich die Werte fiir das Bildelement 2 und das Hintergrundelement 4 deutlich (d.h. mehr als 20° modulo 360°) unterscheiden, z.B. Δϕ = 45°, 90°, 180°, 270° usw. Die Beugungsgitter B (F₁, F₂, Δϕ) der Bild- und Hintergrundelemente 2, 4 verhalten sich optisch verschieden von den in den Flächen- und Teilelementen 3, 5 verwendeten Reliefstrukturen.

Vorzugsweise lenken die in den Flächen- und Teilelementen 3, 5 verwendeten Reliefstrukturen kein auf das Flächenelement 1 einfallendes Licht in die Richtungen der von den Beugungsgittern B (F₁, F₂, Δϕ) gebeugten Strahlung.

Im Flächenelement 1 ist das Beugungsgitter B (F₁, F₂, Δϕ) beispielsweise aus den Reliefstrukturen F₁ und F₂ erzeugt, deren Profil im Querschnitt Sinusfunktionen sind. Das Verhältnis V_{F} der Spatialfrequenz f₂ der zweiten Sinusfunktion (Reliefstruktur F₂) zur Spatialfrequenz f₁ der ersten Sinusfunktion (Reliefstruktur F₁), d.h. V_{F} = f₂/f₁, wird mit Vorteil aus dem Bereich 1,5 ≤ V_{F} ≤ 3 gewählt und das Verhältnis V_{A} der Amplitude A₂ der zweiten Sinusfunktion zur Amplitude A₁ der ersten Sinusfunktion (V_{A} = A₂/A₁) aus dem Bereich 0,1 bis 10. Die Periode der überlagerten Reliefstruktur F₁ + F₂ bzw. die Spatialfrequenz des Beugungsgitters B (F₁, F₂, Δϕ) ist gleich wie die niedrigere der beiden Spatialfrequenzen f₁, f₂, hier die Spatialfrequenz f₁ der ersten Sinusfunktion. Anstelle der Spatialfrequenz f₂ der zweiten Reliefstruktur F₂ aus dem Bereich 1,5 ≤ V_{F} ≤ 3 ist auch eine höhere zu der Spatialfrequenz f₂ harmonische Spatialfrequenzen f₂' wählbar.

Beispielsweise erzeugen die beiden Reliefstrukturen F₁ = A₁• sin(Kx) und F₂ = A₂• sin(2•Kx+90°) mit der Amplitude A₁ = 50 nm, der Amplitude A₂ =25 nm = ½A₁ das Beugungsgitter B_{B}(F₁, F₂, 90°) für das Bildelement 2 auf. Das Hintergrundelement 4 weist das Beugungsgitter B_{H}(F₁, F₂, 0°), dessen Parameter bis auf die relative Phasenverschiebung Δϕ gleich sind. Die Gittervektoren G₁, G₂ und daher auch der Gittervektor G_{B} des Beugungsgitters B_{B}(F₁, F₂, 90°) und der Gittervektor G_{H} des Beugungsgitters B_{H} sind auf die ausgezeichnete Achse 6 ausgerichtet. Bei senkrecht auf das Flächenmuster 1 einfallendem polychromatischen Licht sieht ein Beobachter, der das Flächenmuster 1 mit dem unbewaffneten Auge betrachtet, wenigstens das an den Strukturen des Bildelements 2 und des Hintergrundelements 4 gebeugte Licht, wenn die Betrachtungsrichtung in einer Ebene, der Beugungsebene, liegt, die durch das einfallende Licht und die ausgezeichnete Achse 6 aufgespannt wird und eine Beugungsordnung mit der Betrachtungsrichtung zusammenfällt. Die für die Flächenelemente 3 und für die Teilelemente 5 verwendeten Reliefstrukturen weisen andere Sichtbarkeitsbedingungen auf, z.B. die aus der eingangs erwähnten EP-A 105'099. und sind allenfalls als matte Flächen sichtbar. Da die beiden Beugungsgitter B_{B}(F₁, F₂, 90°) und B_{H}(F₁, F₂, 0°) die gleiche Spatialfrequenz besitzen, sieht der Beobachter die beiden Flächen des Bildelements 2 und des Hintergrundelements 4 in der gleichen Farbe, z.B. grün. Im gewählten Ausführungsbeispiel ist die Reliefstruktur F₂ die erste Harmonische zur Reliefstruktur F₁. Das Beugungsgitter B_{B}(F₁, F₂, 90°) des Bildelements 2 ist daher im wesentlichen symmetrisch und lenkt das gebeugte senkrecht einfallende Licht mit gleicher Intensität in die positiven wie in die negativen Beugungsordnungen unter dem gleichen Beugungswinkeln ab. Das im Hintergrundelement 4 verwendete Beugungsgitter B_{B}(F₁, F₂, 0°) ist asymmetrisch und bevorzugt die positiven Beugungsordnungen. Das Hintergrundelement 4 weist eine geringere Helligkeit als das Bildelement 2 auf, wenn eine Komponente der Betrachtungsrichtung in Richtung der ausgezeichneten Achse 6 weist. Jedoch ist die Helligkeit des Hintergrundelements 4 grösser als die des Bildelements 2, wenn die eine Komponente der Betrachtungsrichtung der Richtung der ausgezeichneten Achse 6 entgegengesetzt ist, z.B. nach einer Drehung in Richtung des Pfeils 8 um 180° um eine senkrecht zur Ebene des Flächenmusters 1 gedachte Drehachse 7. In der Figur 1 ist z.B. das Hintergrundelement 4 intensiver (in der Zeichnung heller dargestellt) als das Bildelement 2. Die beiden Elemente 2 und 4 dienen gegenseitig als Referenz, die dem Beobachter hilft, die Helligkeitsverteilung in den beiden Elementen 2 und 4 zu beurteilen. Im Flächenmuster 1 kann eine Vielzahl von Hintergrundelementen 4 und Bildelementen 2 angeordnet sein, die wenigstens paarweise eine von den übrigen verschiedene ausgezeichnete Achse 6 aufweisen.

Die Figur 2 zeigt das Flächenmuster 1 nach der 180° - Drehung um die Drehachse 7. Das Hintergrundelement 4 ist jetzt wesentlich weniger intensiv als das Bildelement 2. Diese Aenderung der Helligkeit der Flächen der Hintergrundelemente 4 relativ zu denen der Bildelements 2 ist auch bei diffusem Lichteinfall leicht festzustellen. In der Zeichnung ist dies durch eine andere Abschattierung dargestellt. Das Echtheitsmerkmal des Flächenmusters 1 kann der Beobachter überprüfen, indem er das Flächenmuster 1 in Richtung der Achse 6 oder entgegengesetzt zu dieser Richtung unter sonst gleichen Bedingungen betrachtet. Wenn das einfallende Licht polychromatisch ist, erscheinen dem Beobachter die Flächen des Hintergrundelements 4 und des Bildelements 2 in der gleichen Farbe jedoch mit einem deutlichen Kontrast in der Helligkeit, die insbesondere an einer Begrenzung 9 zwischen den beiden Elementen 2 und 4 gut erkennbar ist. Der Kontrast in der Helligkeit wechselt je nachdem, ob das Flächenmuster 1 in Richtung der Achse 6 oder entgegengesetzt zu dieser Richtung unter sonst gleichen Bedingungen betrachtet wird. Das Bildelement 2 und das Hintergrundelement 4 sind nur in einem relativ engen Bereich rA vom Azimut der Beugungsebene (also im Bereich 0°± rA und 180°± rA), d.h. parallel zur Achse 6, sichtbar, wie dies von linearen Beugungsgittern allgemein bekannt ist. In den übrigen Bereichen des Azimuts sind die Elemente 2 und 4 matt, jedoch können die Flächenelemente 3 und/oder die Teilelemente 5 aufleuchten.

Eine Verwendung dieses neuen Echtheitsmerkmal im Flächenelement 1 bietet die Vorteile, dass es insbesondere bei schwacher Beleuchtung und auch bei diffusem Lichteinfall gut erkennbar ist, dass es für den Mann auf der Strasse ohne Hilfsmittel leicht festzustellen ist und dass es nur mit sehr grossem Aufwand, wenn überhaupt, mit holographischen Methoden kopiert werden kann.

Die Helligkeit des Bildelements 3 ist mit Hilfe der Flächenelemente 4 unauffällig zu schwächen. Wenn in der Fläche des Bildelements 3 eine Vielzahl der sehr kleinen Flächenelemente 4 angeordnet sind, deren Abmessungen die in der EP-A 0'330'738 genannten Masse (0,3 mm) nicht überschreiten und die als spiegelnde bzw. streuende Flächenelemente 4 kein Licht bzw. nur Licht mit einer sehr geringen Intensität in der Betrachtungsrichtung des Beobachters werfen. Beispielsweise können die Flächenelemente 4 als spiegelnde Mikroschriften ausgeführt sein. Mit einem vorbestimmten Flächenanteil der Flächenelemente 4 innerhalb des Bildelements 2 kann auf diese Weise die Helligkeit des Bildelements 2 auf den Wert der Helligkeit des Hintergrundelements 4 gesenkt werden, so dass der Kontrast zwischen dem Bildelement 2 und dem Hintergrundelement 4 an einer hier gepunktet gezeichneten Berandung 9 des Bildelements 2 verschwindet und das gleichfarbige Bildelement 2 vor dem Hintergrundelement 4 nicht mehr wahrgenommen wird. Nach einer weiteren 180° - Drehung ist der Kontrast an der Begrenzung 9 in der Figur 1 wieder maximal, wobei die Helligkeit des Bildelements 2 auf dem durch die Flächenelemente 4 reduzierten Wert bleibt.

Die Figur 3 zeigt ein Schriftfeld 10 mit einem Schriftband 11 mit alphanumerischen Zeichen darstellenden Flächen, die mit dem Beugungsgitter B_{H} (F₁, F₂, 0°) belegt sind. Das Schriftfeld 10 entspricht dem Bildelement 2 mit dem Beugungsgitter B_{B} (F₁, F₂, 90°), während sich die Flächen des Schriftbands 11 mit dem Beugungsgitter B_{H} (F₁, F₂, 0°) wie das Hintergrundfeld 4 (Figur 1) bei der Drehung um 180° verhalten. In der linken Zeichnung der Figur 3, d.h. vor der 180° - Drehung um die Drehachse 7, steht das Schriftband 11 in der gleichen Farbe hell vor dem Schriftfeld 10. In der rechten Zeichnung der Figur 3, d.h. nach der 180° - Drehung um die Drehachse 7, ist das Schriftband 11 in der gleichen Farbe dunkler als das gleichmässig mit dem Beugungsgitter B_{B} (F₁, F₂, 90°) belegte Schriftfeld 10. Falls wiederum die Flächenelemente 3 (Figur 2) zur Abdunklung des Schriftfelds 10 eingesetzt werden, kann die Helligkeit des Schriftfelds 10 der des Schriftbands 11 so angepasst werden, dass vor der Drehung um 180° der Text lesbar ist, nicht jedoch nach der Drehung um 180°. Wie in der Beschreibung zur Figur 2 verschwindet in der rechten Zeichnung der Figur 3 der Kontrast an den Berandungen 9 (Figur 2) der alphanumerischen Zeichen des Schriftbands 11 in einer Abdunklungszone 12 zwischen dem Schriftfeld 10 und dem Schriftband 11. Das Schriftband 11 wird vor dem gleichfarbigen Schriftfeld 10 nicht mehr wahrgenommen, wenn die Helligkeiten im wesentlichen gleich sind. Umgekehrt ist in der linken Zeichnung der Figur 3, d.h. vor der 180°- Drehung um die Drehachse 7, der Kontrast zwischen dem Schriftband 11 und dem Schriftfeld 10 entsprechend dem Grad der Abdunklung im Schriftfeld 10 vergrössert.

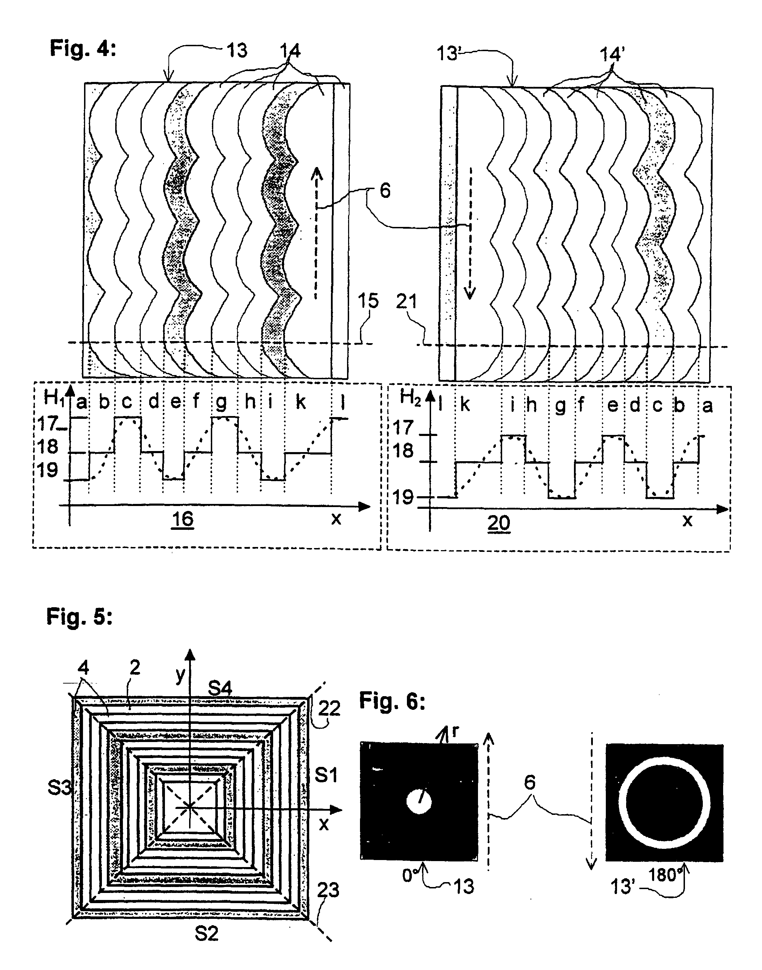

Die Figur 4 zeigt in der linken Zeichnung ein Muster 13 mit einer Vielzahl der Bildelemente 2 (Figur 1) und der Hintergrundelemente 4 (Figur 1) abwechslungsweise angeordnet, wobei eine wellenförmige Einteilung des Musters 13 durch gewellte, parallele Bänder 14 entsteht, die alle das gleiche Beugungsgitter B(F₁, F₂, Δϕ) aufweisen und deren Gittervektoren G_{B} parallel zur ausgezeichneten Achse 6 ausgerichtet sind. Längs einer die Bänder schneidenden Linie 15 sind die Bänder 14 des Musters 13 in Bereiche a bis 1 eingeteilt, wie sie unterhalb des Musters 13 mit den Buchstaben a bis 1 bezeichnet sind. Die relative Phasenverschiebung Δϕ ändert sich in den Bändern 14 längs der Linie 15 stufenweise entsprechend den Bezeichnungen a bis 1. Die Helligkeit der Bänder 14 und die relative Phasenverschiebung Δϕ in jedem der Bänder 14 sind in der Tabelle 1 zusammengestellt.

**Tabelle 1:**

| Bandbereich: | a | b | c | d | e | f | g | h | i | k | l |
|---|---|---|---|---|---|---|---|---|---|---|---|
| Bildelement (2) | - | ja | - | ja | - | ja | - | ja | - | ja | - |
| Hintergrund (4) | ja | - | ja | - | ja | - | ja | - | ja | - | ja |
| Δϕ: | 0° | 90° | 180° | 270° | 0° | 90° | 180° | 270° | 0° | 90° | 180° |
| Helligkeitsgrad: | dunkel | mittel | hell | mittel | dunkel | mittel | hell | mittel | dunkel | mittel | hell |
| [Hintergrund (4) = Hintergrundelement (4)] | | | | | | | | | | | |

Unterhalb des Musters 13 ist in einem ersten Diagramm 16 die relative Helligkeit der Bänder 14 als Funktion des Weges x längs der Linie 15 dargestellt. Der Kontrast, d.h. der Uebergang von einem der Bänder 14 zum andern folgt der ausgezogenen, stufenförmigen ersten Helligkeitsfunktion H₁(x), die zwischen einem hohen Wert 17 der relativen Helligkeit (= "hell"), einem mittleren Wert 18 (= "mittel") und einem niedrigen Wert 19 der relativen Helligkeit (= "dunkel") pendelt.

Die rechte Zeichnung der Figur 4 zeigt das Muster 13' nach der 180° - Drehung um die Drehachse 7 (Figur 1). Die Helligkeiten der Hintergrundelemente 4 sind vertauscht. Die Helligkeit der Bildelemente 2 bleibt vor und nach der 180° - Drehung um die Drehachse 7 gleich. Unterhalb des gedrehten Musters 13' ist in einem zweiten Diagramm 20 die relative Helligkeit der Bänder 14' als Funktion des Weges x längs der Linie 21 dargestellt. Der Kontrast, d.h. der Uebergang von einem der Bänder 14' zum ändern folgt der ausgezogenen, stufenförmigen zweiten Helligkeitsfunktion H₂(x), die den Helligkeitswechsel im Muster 13' klar aufzeigt. Die Bereiche b, d, f, h und k mit den mittleren Werten 18 bilden die Referenz fiir den Helligkeitswechsel in den Bereichen a, c, e, g und l.

In den Diagrammen 16 bzw. 20 ist punktiert eingezeichnet die Helligkeitsfunktion H₁(x) bzw. H₂(x), die eine einfache stetige Funktion der relativen Phasenverschiebung Δϕ(x) verursacht. Aendert sich im Muster 13 bzw. 13' die relative Phasenverschiebung Δϕ(x) periodisch zwischen 0° und 360°, z.B. als Sinusfunktion, wird auch die Helligkeitsfunktion H₁(x) bzw. H₂(x) stetig und periodisch (punktierter Funktionsverlauf). Der Kontrast zwischen den Bändern 14 erfolgt in einem kontinuierlichen Uebergang und nicht mehr in Stufen. Für den Beobachter schrumpfen die Bereiche b, d, f, h und k mit den mittleren Werten 18 etwas, bilden jedoch immer noch die Referenz für den Helligkeitswechsel in den Bereichen a, c, e, g und l. Die Bänder 14, 14' der Figur 4 sind alle in der gleichen Farbe sichtbar und unterscheiden sich nur durch ihre Helligkeit.

Die einfache stetige Funktion der relativen Phasenverschiebung Δϕ(x) weist z.B. das Beugungsgitter B(F₁, F₂, Δϕ) auf, dessen Reliefstruktur F₁ ein sinusartiges Profil im Querschnitt aufweist. Die Spatialfrequenz f₁ der ersten Reliefstruktur F₁ ändert sich langsam über das Muster 13, 13' längs der Linie 15 bzw. 21, wobei aufeinanderfolgende Maxima der Helligkeitsfunktion H₁(x) bzw. H₂(x) auftreten, wenn die Reliefstruktur F₁ und die Reliefstruktur F₂ in Phase sind.

In einem Beispiel beträgt bei der ersten Reliefstruktur F₁ die Spatialfrequenz f₁ = 1006 Linien/mm mit einer Frequenzänderung (= "frequency cirp") von 6 % der Spatialfrequenz f₁ über 100 mm. Die Maxima der beobachteten Helligkeitsfunktion H₁(x) bzw. H₂(x) liegen 1, 8 mm auseinander. Die zweite Reliefstruktur F₂ weist die konstante Spatialfrequenz f₂ von 2012 Linien/mm auf.

Die Figur 5 zeigt ineinander verschachtelte Rechtecke als Muster 13, wobei die y-Achse parallel zur ausgezeichneten Achse 6 (Figur 4) ist. Die in der Zeichnung der Figur 5 durch Graustufen dargestellte Helligkeitsverteilung ändert sich bei der 180° - Drehung des Flächenmusters 1 (Figur 1) um die Drehachse 7, wobei im hier nicht dargestellten gedrehten Muster 13' (Figur 4) die weiss dargestellten Flächen der einen Hintergrundelemente 4 als dunkel abgetönte und die dunkel abgetönten Flächen der andern Hintergrundelemente 4 als weisse zu zeichnen sind, während die mittel abgetönten Flächen der Bildelemente 2 unverändert bleiben. Gedachte Linien 22 und 23 begrenzten die vier Sektoren S1 bis S4 des Musters 13. In den Sektoren S1 und S3 ändert sich die relative Phasenverschiebung Δϕ(x) in Richtung der x-Achse bzw. entgegengesetzt dazu. Im Sektor S2 bzw. S4 ändert sich die relative Phasenverschiebung Δϕ als Funktion von y in Richtung der negativen y-Achse bzw. in Richtung der positiven y-Achse. Wird diese Sektoreneinteilung fein genug ausgeführt, verwandelt sich das Muster 13 in ineinander verschachtelte Kreisringe und die relative Phasenverschiebung Δϕ ändert sich von einem Zentrum aus radial nach aussen.

Eine solche im wesentlichen radial sich ändernde relative Phasenverschiebung Δϕ(x, y) erzeugt die Ueberlagerung aus der Reliefstruktur F₁ mit der sich um 0,6 Perioden/mm ändernden Spatialfrequenz f₁ = 1006 Linien/mm und der Reliefstruktur F₂ mit der Spatialfrequenz f₂ von 2012 Linien/mm, wenn die Gittervektoren G₁ und G₂ der Reliefstrukturen F₁, F₂ einen sehr kleinen Winkel α (0° < α < 10°) einschliessen. Der Winkel α und die Frequenzänderung der Spatialfrequenz f₁ ist genau abzustimmen, falls eine relative Phasenverschiebung Δϕ(r) erzeugt werden soll. Der Beobachter erkennt in der Figur 6 auf dem Flächenmuster 1 (Figur 1) das Muster 13, das vom Zentrum ausgehend die relative Phasenverschiebung Δϕ(r) aufweist, aus konzentrischen Kreisringen gleicher Farbe aber mit unterschiedlicher Helligkeit. Nach einer Drehung um 180° blinkt das Muster 13' im senkrecht einfallenden polychromatischen Licht wieder auf, jedoch sind die Maxima und Minima der Helligkeit der konzentrischen Kreisringe vertauscht. Im ganzen Muster 13 sind die Gittervektoren G_{B} im wesentlichen parallel zur ausgezeichneten Achse 6.

Sehr wirkungsvoll sind die mit den Beugungsgittern B(F₁, F₂, Δϕ) belegten Bild- und Hintergrundelemente 2 (Figur 1) und 4 (Figur 1) zur Darstellung von Abschattierung und Glanzstellen bei Bandschleifen oder anderen Bildern, die im zweidimensionalen Flächenmuster 1 (Figur 1) dreidimensionale Körpern vortäuschen. Insbesondere können die mit den Beugungsgittern B(F₁, F₂, Δϕ) belegten Bild- und Hintergrundelemente 2 und 4 die Muster 13 erzeugen, die in der am gleichen Tag von der Anmelderin beim Eidgenössischen Institut für Geistiges Eigentum hinterlegten Anmeldung (WO 99/38038) beschrieben sind.

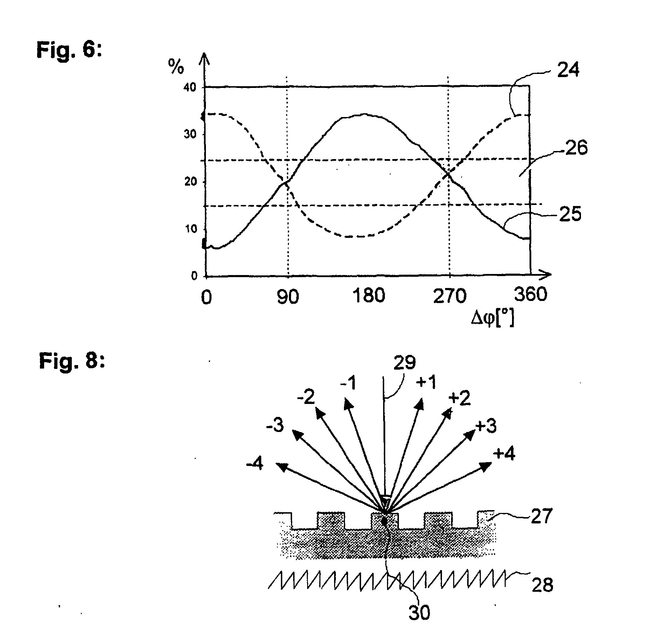

Die beschriebenen Beugungsgitter B(F₁, F₂, Δϕ) für die relativen Phasenverschiebungen Δϕ weisen für polarisiert einfallendes Licht unterschiedliche Beugungswirkungsgrade auf. Schwingt das einfallende Licht parallel zu den Furchen des Beugungsgitters B(F₁, F₂, Δϕ), d.h. bei einer TE - Polarisation, ist der relative Beugungswirkungsgrad eine Funktion der relativen Phasenverschiebung Δϕ, wie dies die Figur 7 zeigt. Der TE-Beugungswirkungsgrad der +1. Beugungsordnung in Prozent folgt einer cos(Δϕ) - Funktion 24 und weist für Δϕ = 0° bzw. 360° ein Maximum auf, der Beugungswirkungsgrad der -1. Beugungsordnung ist als sin(Δϕ) - Funktion 25 dort minimal. Die Asymmetrie verschwindet für die Werte Δϕ = 90° und 270°. Schwingt das einfallende Licht senkrecht zu den Furchen des Beugungsgitters B(F₁, F₂, Δϕ), d.h. bei einer TM - Polarisation, ist die Asymmetrie des Beugungswirkungsgrads in Prozent wesentlich geringer und bewegt sich in einer Bandbreite 26 von etwa ± 5 % um den Wert 20 %. Bei der Betrachtung des Flächenmusters 1 (Figur 1) bei einfallendem unpolarisierten Licht ist die Asymmetrie des Beugungsgitters B(F₁, F₂, Δϕ) weniger ausgeprägt. Bei einer Betrachtung des Flächenmusters 1 durch ein Polarisationsfilter kann der Helligkeitswechsel bei der 180°- Drehung verstärkt werden, wenn bei einfallendem unpolarisierten Licht die Komponente der TM - Polarisation ausgefiltert wird. Es wird an dieser Stelle ausdrücklich auf die noch unpublizierte Anmeldung PCT/EP 97/04608 mit dem Prioritätstag vom 4.09.1996 verwiesen.

In der Figur 8 ist eine Rechteckfunktion 27 und eine asymmetrische Sägezahnfunktion 28 dargestellt. Das Beugungsgitter B(F₁, F₂, Δϕ) weist eine Reliefstruktur auf, die eine Ueberlagerung aus der erste Reliefstruktur F₁, der Rechteckfunktion 27, und der zweiten Reliefstruktur F₂, der asymmetrischen Sägezahnfunktion 28, ist. Die relative Phasenverschiebung Δϕ beeinflusst das Beugungsverhalten des Beugungsgitters B(F₁, F₂, Δϕ) wiederum erheblich. In der Tabelle 2 sind die in polarisiertem Licht 29 mit der Wellenlänge 632,8 nm gemessenen Asymmetriewerte, d.h. das Verhältnis der Intensität in der Beugungsordnung +1 zur Intensität in der Beugungsordnung -1, in Abhängigkeit von der relativen Phasenverschiebung Δϕ aufgeführt.

**Tabelle 2:**

| Relative Phasenverschiebung Δϕ. | 0° | 45° | 90° |
|---|---|---|---|
| +1. Beugungsordnung TE | 12.9 | 1.8 | 7.7 |
| -1. Beugungsordnung TE | 2.9 | 15.8 | 14.3 |
| Asymmetrie: | 4.4 | 0.1 | 0.5 |

Die bisher beschriebenen Flächenmuster 1 (Figur 1) können in einer anderen Ausführung auch das aus der Rechteckfunktion 27 und der Sägezahnfunktion 28 erzeugte Beugungsgitter B(F₁, F₂, Δϕ) für die Bild- und Hintergrundelemente 2 (Figur 1) und 4 (Figur 1) oder die Muster 13 (Figur 6) aufweisen. Das Verhältnis der Spatialfrequenz f₂ der asymmetrischen Sägezahnfunktion 28 zur Spatialfrequenz f₁ der Rechteckfunktion 27 ist aus dem Bereich 2 bis 5 zu wählen, während das Verhältnis der Profilhöhe P₂ der asymmetrischen Sägezahnfunktion 28 zur Profilhöhe P₁ der Rechteckfunktion 27 im Bereich 1 bis 4 liegt. Die relative Phasenverschiebung Δϕ zwischen der ersten Reliefstruktur F₁ und der zweiten Reliefstruktur F₂ bestimmt, ob das Beugungsgitter B(F₁, F₂, Δϕ) das senkrecht auf das Flächenmuster 1 einfallende Licht 29 symmetrisch oder asymmetrisch beugt.

Die Reliefstrukturen F₁ und F₂ des Beugungsgitters B(F₁, F₂, Δϕ) im Beispiel fiir die Messwerte der Tabelle 2 weisen für die ersten Reliefstruktur F₁ eine konstante Spatialfrequenz f₁ = 259 Linien/mm und eine Profilhöhe P₁ von 200 nm auf; für die zweite Reliefstruktur F₂ beträgt die Spatialfrequenz f₂ = 1036 Linien/mm bei einer Profilhöhe P₂ von 200 nm mit einem Blazewinkel von 17°. Vorteilhaft kann die zweite Spatialfrequenz f₂ auch einen niedrigen "frequency cirp" aufweisen, so dass sich die relative Phasenverschiebung von Δϕ = 0° auf Δϕ = 180° auf einem Weg über das Flächenmuster 1 von 2,8 mm ändert.

Bei einem Muster 13 (Figur 6) ändert sich das Helligkeitsmuster beim Kippen um eine zu den Furchen des B(F₁, F₂, Δϕ) parallele Kippachse 30 von Beugungsordnung zu Beugungsordnung, mit den ganzen Zahlen von -4 bis +4 bezeichnet. Beispielsweise ist der Kontrast bei der +3. Ordnung intensiv, bei der +2. Ordnung ganz schwach, bei der +1. Ordnung sind die Kontraste wieder intensiv, jedoch ist die Helligkeitsverteilung wie beim Muster 13' (Figur 6) vertauscht. In speziellen Fällen kann in den negativen Beugungsordnungen die Helligkeitsverteilungen gespiegelt sein, die -1. Ordnung entspricht der +3. Ordnung und die -3. Ordnung entspricht der +1. Ordnung. Somit ist auch die Aenderung der Helligkeitsverteilung bei der 180° - Dréhung in der Ebene des Musters 13 vorhanden.

Es ist anzumerken, dass in den Zeichnungen der Figuren die relativen Helligkeitsverteilungen, die ein Beobachter unter der entsprechenden Betrachtungsrichtung erblickt, mit Hilfe einer Graustufung in den Bildelementen 2 bzw. Hintergrundelementen 4, nicht aber in den allfällig gezeigten Elementen 3 und 5, dargestellt sind. Die ausgezeichnete Achse 6 verdeutlicht die relative Lage des Flächenmusters 1. Unter dem Begriff "Helligkeit" ist stets die Flächenhelligkeit gemeint, also die Intensität des in der Betrachtungsrichtung gesandten gebeugten Lichts pro Flächeneinheit des beugenden Elements 2 bis 5.

## Patentansprüche

1. Flächenmuster (1) aus mosaikartig angeordneten Elementen (2 bis 5), von denen wenigstens ein Hintergrundelement (4) und ein Bildelement (2) mikroskopisch feine, sichtbares Licht (29) beugende Beugungsgitter B aus einer Ueberlagerung von wenigstens zwei verschiedenen Reliefstrukturen F₁, F₂ aufweisen und Flächenelemente (3) und Teilelemente (5) entweder die mikroskopisch feinen, sichtbares Licht (29) beugenden Reliefstrukturen enthalten oder aus spiegelnden oder streuenden Flächen bestehen,
**dadurch gekennzeichnet,**
**dass** ein erstes Beugungsgitter B_{B}, dessen Reliefstruktur durch die Ueberlagerung von wenigstens zwei verschiedenen Reliefstrukturen F₁, F₂ und durch eine Phasenverschiebung Δϕ_{B} beschrieben ist, im Bildelement (2) und ein zweites Beugungsgitter B_{H}, dessen Reliefstruktur durch die Ueberlagerung der Reliefstrukturen F₁, F₂ und durch eine Phasenverschiebung Δϕ_{H} beschrieben ist, im Hintergrundelement (4) angeordnet sind,
**dass** die Reliefstruktur der Beugungsgitter B_{B} und B_{H} eine Summe der Reliefstrukturen F₁ + F₂ ist, wobei F₁ die erste Reliefstruktur mit einer Spatialfrequenz f₁ und F₂ die zweite Reliefstruktur mit einer Spatialfrequenz f₂ und Δϕ eine relative Phasenverschiebung der zweiten Reliefstruktur F₂ gegenüber der ersten Reliefstruktur F₁ ist, und die Spatialfrequenz des Beugungsgitters B_{B} und die des Beugungsgitters B_{H} gleich der niederen der beiden Spatialfrequenzen f₁ und f₂ sind,
**dass** das Verhältnis V_{F} der zweiten zur ersten Spatialfrequenz f₂ / f₁ einen Wert aus dem Bereich 1.5 ≤ V_{F} ≤ 3 aufweist,
**dass** die Gittervektoren des ersten Beugungsgitters B_{B} im Bildelement (2) und des zweiten Beugungsgitters B_{H} im Hintergrundelement (4), sowie die Gittervektoren der beiden Reliefstrukturen F₁, F₂ im wesentlichen parallel oder antiparallel zu einer ausgezeichneten Achse (6) ausgerichtet sind und
**dass** sich das erste Beugungsgitter B_{B} und das zweite Beugungsgitter B_{H} nur durch die relative Phasenverschiebung Δϕ der für die Ueberlagerung mit der ersten Reliefstruktur F₁ verwendeten zweiten Reliefstruktur F₂ unterscheiden.

2. Flächenmuster (1) nach Anspruch 1, **dadurch gekennzeichnet, dass** die relative Phasenverschiebung Δϕ des Beugungsgitters B_{B} bzw. B_{H} im ganzen Feld des Bildelements (2) und/oder des Hintergrundelements (4) einen konstanten Wert aufweist.

3. Flächenmuster (1) nach Anspruch 2, **dadurch gekennzeichnet, dass** sich die Werte der relativen Phasenverschiebung Δϕ der Beugungsgitter B_{B} und B_{H} um mehr als 20° modulo 360° unterscheiden.

4. Flächenmuster (1) nach einem der Ansprüche 1 bis 3, **dadurch gekennzeichnet, dass** eine Vielzahl der Bildelemente (2) und der Hintergrundelemente (4) abwechslungsweise angeordnet sind, dass die Gittervektoren aller Beugungsgitter B(F1, F2, Δϕ) der Bildelemente (2) und der Hintergrundelemente (4) auf die Achse (6) ausgerichtet sind und dass die relative Phasenverschiebung Δϕ beim Uebergang von einem Element (2; 4) zum benachbarten Element (4; 2) stufenweise um einen vorbestimmten Wert ändert.

5. Flächenmuster (1) nach einem der Ansprüche 1 bis 4, **dadurch gekennzeichnet, dass** die Reliefstrukturen F₁, F₂ Sinusfunktionen sind, wobei das Verhältnis der Amplitude A₂ der zweiten Sinusfunktion zur Amplitude A₁ der ersten Sinusfunktion im Bereich 0,1 bis 10 liegt.

6. Flächenmuster (1) aus mosaikartig angeordneten Elementen (2 bis 5), von denen wenigstens ein Bildelement (2) ein mikroskopisch feines, sichtbares Licht (29) beugendes Beugungsgitter B aus einer Ueberlagerung von wenigstens zwei Reliefstrukturen F₁, F₂ aufweist und die andern Elemente (3 bis 5) entweder die mikroskopisch feinen, sichtbares Licht (29) beugenden Reliefstrukturen enthalten oder aus spiegelnden oder streuenden Flächen bestehen,
**dadurch gekennzeichnet,**
**dass** das Beugungsgitter B eine überlagerte Reliefstruktur aufweist, die aus einer Summe der Reliefstrukturen F₁ + F₂ gebildet ist, wobei F₁ eine erste Reliefstruktur mit einer Spatialfrequenz f₁ und F₂ eine zweite Reliefstruktur mit einer Spatialfrequenz f₂ und Δϕ eine relative Phasenverschiebung der zweiten Reliefstruktur F₂ gegenüber der ersten Reliefstruktur F₁ ist, und die Spatialfrequenz des Beugungsgitters B gleich der niederen der beiden Spatialfrequenz f₁ und f₂ ist,
**dass** die relative Phasenverschiebung Δϕ zwischen der Reliefstruktur F₁ und der Reliefstruktur F₂ eine ortsabhängige, stückweise stetige Funktion der Koordinaten x und y ist
**dass** das Beugungsgitter B und die Reliefstrukturen F₁, F₂ Gittervektoren aufweisen, die im wesentlichen zu einer ausgezeichneten Achse (6) parallel sind.

7. Flächenmuster (1) nach Anspruch 6, **dadurch gekennzeichnet, dass** die relative Phasenverschiebung Δϕ zwischen der Reliefstruktur F₁ und der Reliefstruktur F₂ von wenigstens einem Zentrum aus eine ortsabhängige, stückweise stetige Funktion des Abstands r vom Zentrum ist.

8. Flächenmuster (1) nach Anspruch 5 oder 6, **dadurch gekennzeichnet, dass** die Spatialfrequenz f₁ einen "frequency cirp" von 6% der Spatialfrequenz f₁ über 100 mm aufweist.

9. Flächenmuster (1) nach Anspruch 8, **dadurch gekennzeichnet, dass** die die Gittervektoren der beiden Reliefstrukturen F₁ und F₂ einen Winkel von weniger als 10° einschliessen.

10. Flächenmuster (1) nach einem der Ansprüche 6 bis 9, **dadurch gekennzeichnet, dass** die Reliefstrukturen F₁, F₂ Sinusfunktionen sind, wobei das Verhältnis der Spatialfrequenz f₂ der zweiten Sinusfunktion zur Spatialfrequenz f₁ der ersten Sinusfunktion im Bereich 1,5 bis 3 und das Verhältnis der Amplitude A₂ der zweiten Sinusfunktion zur Amplitude A₁ der ersten Sinusfunktion im Bereich 0,1 bis 10 liegt.

11. Flächenmuster (1) nach einem der Ansprüche 6 bis 10, **dadurch gekennzeichnet, dass** die erste Reliefstruktur F₁ eine Rechteckfunktion (28) ist und die zweiten Reliefstruktur F₂ eine asymmetrische Sägezahnfunktion (29), wobei das Verhältnis der Spatialfrequenz f₂ der asymmetrischen Sägezahnfunktion (29) zur Spatialfrequenz f₁ der Rechteckfunktion (28) im Bereich 2 bis 5 und das Verhältnis der Profilhöhe P₂ der asymmetrischen Sägezahnfunktion (29) zur Profilhöhe P₁ der Rechteckfunktion (28) im Bereich 1 bis 4 liegt.

12. Flächenmuster (1) nach Anspruch 11, **dadurch gekennzeichnet, dass** beim Kippen um eine Kippachse parallel zu Furchen der Beugungsstrukturen B und bei Beleuchtung mit senkrecht einfallendem Licht (29) die mit den Beugungsstrukturen B belegten Flächen der Bildelemente (2) eine vorbestimmte Veränderung der sich einstellender Helligkeit im Vergleich zu den mit den Beugungsstrukturen belegten Flächen der Hintergrundelemente (4) aufweisen, wobei die Bildelemente (2) und die Hintergrundelemente (4) jeweils die gleiche Farbe bzw. Spatialfrequenz besitzen.

13. Flächenmuster (1) nach einem der vorhergehenden Ansprüche, **dadurch gekennzeichnet, dass** in den Flächen der Bildelemente (2) eine Vielzahl der kleinen, vom unbewaffneten Augen nicht erkennbaren Flächenelemente (3) mit einem andern optischen Verhalten als die Beugungsstruktur B angeordnet sind, um die Flächenhelligkeit der Bildelemente (2) zu senken.

14. Flächenmuster (1) nach einem der vorhergehenden Ansprüche, **dadurch gekennzeichnet, dass** ein Kontrast zwischen den Bildelementen (2) und den Hintergrundelementen (4) nur bei polarisiertem Licht (29) verschwindet und dass der Kontrast bei unpolarisiertem Licht (29) erhalten bleibt.

15. Flächenmuster (1) nach einem der vorhergehenden Ansprüche, **dadurch gekennzeichnet, dass** ein Kontrast zwischen den Bildelementen (2) und den Hintergrundelementen (4) nur im unpolarisierten Licht (29) verschwindet und dass der Kontrast bei polarisiertem Licht (29) erhalten bleibt.

## Claims

1. Two-dimensional pattern (1) of elements (2 to 5) arranged in the manner of a mosaic, of which at least one background element (4) and one image element (2) have microscopically fine diffraction gratings B which diffract visible light (29) and comprise a superimposition of at least two different relief structures F₁, F₂, and two-dimensional elements (3) and part elements (5) either contain the microscopically fine relief structures which diffract visible light (29) or consist of reflective or scattering areas,
**characterized**
**in that** a first diffraction grating B_{B}, whose relief structure is described by the superimposition of at least two different relief structures F₁, F₂ and by a phase shift Δϕ_{B}, in the image element (2), and a second diffraction grating B_{H}, whose relief structure is described by the superimposition of the relief structures F₁, F₂ and by a phase shift Δϕ_{H}, are arranged in the background element (4),
**in that** the relief structure of the diffraction gratings B_{B} and B_{H} is a sum of the relief structures F₁ + F₂, F₁ being the first relief structure with a spatial frequency f₁, and F₂ being the second relief structure with a spatial frequency f₂, and Δϕ being a relative phase shift of the second relief structure F₂ with respect to the first relief structure F₁, and the spatial frequency of the diffraction grating B_{B} and that of the diffraction grating B_{H} being equal to the lower of the two spatial frequencies f₁ and f₂,
**in that** the ratio V_{F} of the second to the first spatial frequency f₂/f₁ has a value from the range 1.5 ≤ V_{F} ≤ 3,
**in that** the grating vectors of the first diffraction grating B_{B} in the image element (2) and of the second diffraction grating B_{H} in the background element (4), and also the grating vectors of the two relief structures F₁, F₂ are aligned substantially parallel or antiparallel to an indicated axis (6), and
**in that** the first diffraction grating B_{B} and the second diffraction grating B_{H} differ only in the relative phase shift Δϕ of the second relief structure F₂ used for the superimposition with the first relief structure F₁.

2. Two-dimensional pattern (1) according to Claim 1, **characterized in that** the relative phase shift Δϕ of the diffraction grating B_{B} or B_{H} has a constant value over the entire field of the image element (2) and/or the background element (4).

3. Two-dimensional pattern (1) according to Claim 2, **characterized in that** the values of the relative phase shift Δϕ of the diffraction gratings B_{B} and B_{H} differ by more than 20° modulo 360°.

4. Two-dimensional pattern (1) according to one of Claims 1 to 3, **characterized in that** a large number of the image elements (2) and of the background elements (4) are arranged alternately, **in that** the grating vectors of all the diffraction gratings B (F1, F2, Δϕ) of the image elements (2) and of the background elements (4) are aligned with the axis (6), and **in that** the relative phase shift Δϕ at the transition from one element (2; 4) to the adjacent element (4; 2) changes stepwise by a predefined value.

5. Two-dimensional pattern (1) according to one of Claims 1 to 4, **characterized in that** the relief structures F₁, F₂ are sinusoidal functions, the ratio of the amplitude A₂ of the second sinusoidal function to the amplitude A₁ of the first sinusoidal function lying in the range 0.1 to 10.

6. Two-dimensional pattern (1) of elements (2 to 5) arranged in the manner of a mosaic, of which at least one image element (2) has a microscopically fine diffraction grating B which diffracts visible light (29) and comprises a superimposition of at least two relief structures F₁, F₂, and the other elements (3 to 5) either contain the microscopically fine relief structures which diffract visible light (29) or consist of reflective or scattering areas,
**characterized**
**in that** the diffraction grating B has a superimposed relief structure which is formed from a sum of the relief structures F₁ + F₂, F₁ being a first relief structure with a spatial frequency f₁, and F₂ being a second relief structure with a spatial frequency f₂, and Δϕ being a relative phase shift of the second relief structure F₂ with respect to the first relief structure F₁, and the spatial frequency of the diffraction grating B being equal to the lower of the two spatial frequencies f₁ and f₂,
**in that** the relative phase shift Δϕ between the relief structure F₁ and the relief structure F₂ is a location-dependent, interrupted continuous function of the coordinates x and y,
**in that** the diffraction grating B and the relief structures F₁, F₂ have grating vectors which are substantially parallel to an indicated axis (6).

7. Two-dimensional pattern (1) according to Claim 6, **characterized in that** the relative phase shift Δϕ between the relief structure F₁ and the relief structure F₂, from at least one centre, is a location-dependent, interrupted continuous function of the distance r from the centre.

8. Two-dimensional pattern (1) according to Claim 5 or 6, **characterized in that** the spatial frequency f₁ has a "frequency chirp" of 6% of the spatial frequency f₁ over 100 mm.

9. Two-dimensional pattern (1) according to Claim 8, **characterized in that** the grating vectors of the two relief structures F₁ and F₂ enclose an angle of less than 10°.

10. Two-dimensional pattern (1) according to one of Claims 6 to 9, **characterized in that** the relief structures F₁, F₂ are sinusoidal functions, the ratio of the spatial frequency f₂ of the second sinusoidal function to the spatial frequency f₁ of the first sinusoidal function lying in the range 1.5 to 3, and the ratio of the amplitude A₂ of the second sinusoidal function to the amplitude A₁ of the first sinusoidal function lying in the range 0.1 to 10.

11. Two-dimensional pattern (1) according to one of Claims 6 to 10, **characterized in that** the first relief structure F₁ is a square-wave function (28) and the second relief structure F₂ is an asymmetrical sawtooth function (29), the ratio of the spatial frequency f₂ of the asymmetrical sawtooth function (29) to the spatial frequency f₁ of the square-wave function (28) lying in the range 2 to 5, and the ratio of the profile height P₂ of the asymmetrical sawtooth function (29) to the profile height P₁ of the square-wave function (28) lying in the range 1 to 4.

12. Two-dimensional pattern (1) according to Claim 11, **characterized in that** in the event of tilting about a tilt axis parallel to furrows in the diffraction structures B, and illumination with light (29) incident at right angles, the areas of the image elements (2) occupied by the diffraction structures B exhibit a predetermined change in the brightness established in comparison with the areas of the background elements (4) occupied by the diffraction structures, the image elements (2) and the background elements (4) in each case having the same colour or spatial frequency.

13. Two-dimensional pattern (1) according to one of the preceding claims, **characterized in that** in the areas of the image elements (2) there are arranged a large number of the small area elements (3) which cannot be detected by the naked eye and have a different optical behaviour from that of the diffraction structure B, in order to reduce the brightness of the area of the image elements (2).

14. Two-dimensional pattern (1) according to one of the preceding claims, **characterized in that** a contrast between the image elements (2) and the background elements (4) vanishes only under polarized light (29), and **in that** the contrast is maintained under unpolarized light (29).

15. Two-dimensional pattern (1) according to one of the preceding claims, **characterized in that** a contrast between the image elements (2) and the background elements (4) vanishes only under unpolarized light (29), and **in that** the contrast is maintained under polarized light (29).

## Revendications

1. Modèle de surface (1) constitué d'éléments (2 à 5) disposés à la façon d'une mosaïque, dont au moins un élément de fond (4) et un élément d'image (2) présentent des réseaux de diffraction B de finesse microscopique et diffractant la lumière visible (29), constitués d'une superposition d'au moins deux structures de relief F₁, F₂ différentes et des éléments de surface (3) et des éléments partiels (5) soit contiennent des structures de relief de finesse microscopique et réfractant la lumière visible (29) soit sont à base de surfaces réfléchissantes ou diffusantes, **caractérisé en ce que**
un premier réseau de diffraction B_{B,} dont la structure de relief est décrite par la superposition d'au moins deux structures de relief F₁, F₂ différentes et par un déphasage Δϕ_{E}, est disposée dans l'élément d'image (2) et un deuxième réseau de diffraction B_{H}, dont la structure de relief est décrite par la superposition des structures de relief F₁, F₂ et par un déphasage Δϕ_{H}, est disposée dans l'élément de fond (4)
**en ce que** la structure de relief des réseaux de diffraction B_{B} et B_{H} est une somme des structures de relief F₁ + F₂, F₁ étant la première structure de relief avec une fréquence spatiale f₁ et F₂ la deuxième structure de relief avec une fréquence spatiale f₂ et Δϕ un déphase relatif de la deuxième structure de relief F₂ par rapport à la première structure de relief F₁, et la fréquence spatiale du réseau de diffraction B_{B} et celle du réseau de diffraction B_{H} sont égales à la plus faible des deux fréquences spatiale f₁ et f₂
**en ce que** le rapport V_{F} de la deuxième fréquence spatiale f₂ par rapport à la première fréquence spatiale f₁ présente une valeur comprise dans la plage suivante 1,5 ≤ V_{F} ≤ 3
**en ce que** les vecteurs de réseau du premier réseau de diffraction B_{B} dans l'élément d'image (2) et du deuxième réseau de diffraction B_{H} dans l'élément de fond (4) ainsi que les vecteurs de réseau des deux structures de relief F₁, F₂ sont orientés de façon sensiblement parallèle ou antiparallèle par rapport à un axe (6) marqué et
**en ce que** le premier réseau de diffraction B_{B} et le deuxième réseau de diffraction B_{H} ne diffèrent que par le déphasage Δϕ relatif de la deuxième structure de relief F₂ utilisée pour la superposition avec la première structure de relief F₁.

2. Modèle de surface (1) selon la revendication 1, **caractérisé en ce que** le déphasage relatif Δϕ du réseau de diffraction B_{B} et B_{H} présente une valeur constante dans toute la zone de l'élément d'image (2) et/ou de l'élément de fond (4).

3. Modèle de surface (1) selon la revendication 2, **caractérisé en ce que** les valeurs du déphasage relatif Δϕ des réseaux de diffraction B_{B} et B_{H} se différencient de plus de 20 % modulo 360°.

4. Modèle de surface (1) selon l'une quelconque des revendications 1 à 3, **caractérisé en ce qu'**un grand nombre des éléments d'image (2) et des éléments de fond (4) sont disposés en alternance, **en ce que** les vecteurs de réseau de tous les réseaux de diffraction B (F₁, F₂, Δϕ) des éléments d'image (2) et des éléments de fond (4) sont orientés vers l'axe (6) et **en ce que** le déphasage relatif Δϕ change progressivement d'une valeur prédéfinie lors du passage d'un élément (2 ; 4) à l'élément voisin (4 ; 2).

5. Modèle de surface (1) selon l'une quelconque des revendications 1 à 4, **caractérisé en ce que** les structures de relief F₁, F₂ sont des fonctions sinus, le rapport de l'amplitude A2 de la deuxième fonction sinus par rapport à l'amplitude A1 de la première fonction sinus étant situé dans la plage de 0,1 à 10.

6. Modèle de surface (1) constitué d'éléments (2 à 5) disposés à la façon d'une mosaïque, dont au moins un élément d'image (2) présente un réseau de diffraction B à finesse microscopique et réfractant la lumière visible (29) constitué d'une superposition d'au moins deux structures de relief F₁, F₂ et les autres éléments (3 à 5) soit contiennent les structures de relief à finesse microscopique et réfractant la lumière visible (29) soit sont constitués de surfaces réfléchissantes ou diffusantes, **caractérisé en ce que**
le réseau de diffraction B présente une structure de relief superposée, qui est constituée d'une somme des structures de relief F₁ + F₂, F₁ étant une première structure de relief avec une fréquence spatiale f₁ et F₂ une deuxième structure de relief avec une fréquence spatiale f₂ et Δϕ un déphasage relatif de la deuxième structure de relief F₂ par rapport à la première structure de relief F₁ et la fréquence spatiale du réseau de réfraction B étant égale à la plus faible des deux fréquences spatiales f₁ et f₂,
**en ce que** le déphasage relatif Δϕ entre la structure de relief F₁ et la structure de relief F₂ est une fonction dépendante du lieu et partiellement constante des coordonnées x et y et
**en ce que** le réseau de diffraction B et les structures de relief F₁, F₂ présentent des vecteurs de réseau qui sont sensiblement parallèles à un axe (6) dessiné.

7. Élément de surface (1) selon la revendication 6, **caractérisé en ce que** le déphasage relatif Δϕ entre la structure de relief F₁ et la structure de relief F₂ à partir d'au moins un centre est une fonction dépendante du lieu et partiellement croissante de la distance r au centre.

8. Modèle de surface (1) selon la revendication 5 ou 6, **caractérisé en ce que** la fréquence spatiale f₁ présente un "frequency cirp" égal à 6 % de la fréquence spatiale f₁ pour 100 mm.

9. Modèle de surface (1) selon la revendication 8, **caractérisé en ce que** les vecteurs de réseau des deux structures de relief F₁ et F₂ forment un angle d'au moins 10°.

10. Modèle de surface (1) selon l'une quelconque des revendications 6 à 9, **caractérisé en ce que** les structures de relief F₁ et F₂ sont des fonctions sinus, le rapport entre la fréquence spatiale f₂ de la deuxième fonction sinus et la fréquence spatiale f₁ de la première fonction sinus se situe dans la plage de 1,5 à 3 et le rapport entre l'amplitude A₂ de la seconde fonction sinus et l'amplitude A₁ de la première fonction sinus se situe dans la plage de 0,1 à 10.

11. Modèle de surface (1) selon l'une quelconque des revendications 6 à 10, **caractérisé en ce que** la première structure de relief F₁ est une fonction rectangulaire (28) et la deuxième structure de relief F₂ est une fonction asymétrique en dents de scie (29), le rapport entre la fréquence spatiale f₂ de la fonction asymétrique en dent de scie (29) et la fréquence spatiale f₁ de la fonction rectangulaire (28) se situe dans la plage de 2 à 5 et le rapport entre la hauteur de profilé P₂ de la fonction asymétrique en dents de scie (29) et la hauteur de profilé P₁ de la fonction rectangulaire (28) se situe dan la plage de 1 à 4.

12. Modèle de surface (1) selon la revendication 11, **caractérisé en ce que**, lors du basculement autour d'un axe de basculement parallèlement aux sillons des structures de réfraction B et dans le cas d'un éclairage avec une lumière (29) à incidence perpendiculaire, les surfaces occupées par les structures de réfraction B des éléments d'image (2) présentent une variation prédéfinie de la luminosité qui apparaît par rapport aux surfaces, occupées par les structures de réfraction, des éléments de fond (4), les éléments d'image (2) et les éléments de fond (4) présentant respectivement la même couleur et la même fréquence spatiale.

13. Elément de surface (1) selon l'une quelconque des revendications précédentes, **caractérisé en ce qu'**un grand nombre des petits éléments de surface (3) non perceptibles à l'oeil nu avec un autre comportement que la structure de réflexion B est disposé dans les surfaces des éléments d'image (2) afin d'abaisser la luminosité de surface des éléments d'image (2).

14. Modèle de surface (1) selon l'une quelconque des revendications précédentes, **caractérisé en ce qu'**un contraste entre les éléments d'image (2) et les éléments de fond (4) disparaît seulement avec une lumière polarisée (29) et le contraste est conservé avec une lumière non polarisée (29).

15. Modèle de surface (1) selon l'une quelconque des revendications précédentes, **caractérisé en ce qu'**un contraste entre les éléments d'image (2) et les éléments de fond (4) disparaît seulement à la lumière non polarisée (29) et le contraste est conservé avec la lumière polarisée (29).
